# EUROPEAN PATENT SPECIFICATION

(11) **EP 4 517 217 B1**
(45) Date of publication and mention of the grant of the patent: **22.07.2026**
(21) Application number: 24176825.8
(22) Date of filing: 20.05.2024
(51) Int. Cl.: F25B 5/02, F25B 31/00, F25B 49/02

(54) **REFRIGERATION CONTROL METHOD AND DEVICE FOR LIQUID COOLING SYSTEM, SYSTEM, AND STORAGE MEDIUM**
KÜHLSTEUERUNGSVERFAHREN UND -VORRICHTUNG FÜR FLÜSSIGKEITSKÜHLSYSTEM, SYSTEM UND SPEICHERMEDIUM
PROCÉDÉ ET DISPOSITIF DE COMMANDE DE RÉFRIGÉRATION POUR SYSTÈME DE REFROIDISSEMENT PAR LIQUIDE, SYSTÈME ET SUPPORT DE STOCKAGE

(30) Priority: 31.08.2023 CN 202311118060
(43) Date of publication of application: 05.03.2025
(73) Proprietor: CSG Power Generation (Guangdong) Energy Storage Technology Co., Ltd, Guangzhou, Guangdong 510635 (CN)
(72) Inventor: WANG, Zhiqiang, Guangzhou, 510635 (CN); LIU, Bangjin, Guangzhou, 510635 (CN); DONG, Chao, Guangzhou, 510635 (CN); WAN, Sheng, Guangzhou, 510635 (CN); WANG, Jin, Guangzhou, 510635 (CN); XIAO, Di, Guangzhou, 510635 (CN); WU, Jiasheng, Guangzhou, 510635 (CN); ZHOU, Yueli, Guangzhou, 510635 (CN); CHEN, Man, Guangzhou, 510635 (CN); PENG, Yumin, Guangzhou, 510635 (CN); WU, Bin, Guangzhou, 510635 (CN); ZHANG, Min, Guangzhou, 510635 (CN); ZHENG, Xiaodong, Guangzhou, 510635 (CN); LIN, Qihua, Guangzhou, 510635 (CN); WENG, Zheng, Guangzhou, 510635 (CN); WANG, Linwei, Guangzhou, 510635 (CN); TANG, Kejian, Guangzhou, 510635 (CN); PENG, Cheng, Guangzhou, 510635 (CN); ZHAO, Shaohua, Guangzhou, 510635 (CN); ZOU, Lunsen, Guangzhou, 510635 (CN)
(74) Representative: Grassi, Stefano

(56) References cited:
- US-A1- 2011 154 840

## Description

### TECHNICAL FIELD

The present invention relates to the field of energy storage temperature control technologies, and in particular, to a refrigeration control method and device for a liquid cooling system, a system, and a storage medium.

### BACKGROUND

At present, air-cooled temperature control and liquid-cooled temperature control technologies are the main technologies for energy storage temperature control, and technologies using heat pipe and phase change are still in a research stage. Air is used as a cooling medium in the air-cooled temperature control technology, but because the specific heat capacity of the air is low and the thermal conductivity of the air is also low, the air-cooled temperature control technology is more suitable for communication base stations, small energy storage systems, and others with a low power. In the liquid-cooled temperature control technology, heat generated by operation of batteries is transferred by using liquid convection heat transfer. Since the specific heat capacity and the thermal conductivity of the liquid are higher than those of the air, it is more suitable for energy storage systems, data centers, new energy vehicles, and other with high power. However, it is difficult for energy storage temperature control technologies independent of each other to perform real-time adjustment according to on-site temperature changes in devices of the energy storage system, which increases operating power consumption of the devices, thereby reducing overall energy efficiency of the energy storage system. Related technologies are known from US 2011/154840A1 which discloses a refrigerating apparatus including a refrigerant amount regulation tank connected to a refrigerant circuit on a high pressure side, a communicating circuit connecting an upper part of the tank to a medium pressure region of the refrigerant circuit, a communicating circuit connecting a lower part of the tank to the medium pressure region of the refrigerant circuit, and control means for controlling electromagnetic valves of the communicating circuits to collect a refrigerant circulated through the refrigerant circuit in the tank and discharging refrigerant to the refrigerant circuit.

### SUMMARY

Based on the above, there is a need to provide, with respect to the above technical problems, a refrigeration control method and device for a liquid cooling system, a system, and a storage medium, which can reduce the operating power consumption of devices of the energy storage system, thereby improving the overall energy efficiency of the energy storage system.

In a first aspect, the present invention provides a refrigeration control method for a liquid cooling system, applied to a controller of the liquid cooling system. The liquid cooling system further includes a fixed-frequency compressor and a variable-frequency compressor both connected to the controller and configured to compress a refrigerant. The method includes: acquiring an operating environment temperature of the liquid cooling system; acquiring a load change in the liquid cooling system in response to confirming, based on the operating environment temperature, that a compression refrigeration condition is currently satisfied; and determining a matching compressor operating mode based on the load change. The compressor operating mode is used to instruct the fixed-frequency compressor and the variable-frequency compressor to cooperate to compress the refrigerant until the compressed refrigerant enters a condenser to complete a refrigeration cycle.

In an embodiment, the liquid cooling system further includes an oil cooling coil configured to naturally cool a coolant. The method further includes: confirming, if the operating environment temperature is greater than a first temperature threshold, that the compression refrigeration condition is currently satisfied, and closing the oil cooling coil, to determine the matching compressor operating mode based on the load change; and confirming, if the operating environment temperature is less than or equal to a second temperature threshold, that a natural cooling condition is currently satisfied, and opening a corresponding valve to allow the coolant to enter the oil cooling coil; wherein the second temperature threshold is less than the first temperature threshold.

In an embodiment, the method further includes: determining, in response to acquisition of an outlet temperature of the coolant, an operating frequency of the variable-frequency compressor based on the outlet temperature of the coolant.

In an embodiment, the liquid cooling system further includes a cooling fan configured to cool the oil cooling coil. The method further includes: adjusting an operating speed of the cooling fan based on the load change and the operating environment temperature.

In an embodiment, the determining a matching compressor operating mode based on the load change includes: making, if a current load condition is confirmed as a high load condition based on the load change, the compressor operating mode used to instruct the fixed-frequency compressor to perform compression and the variable-frequency compressor to stop compression; and making, if the current load condition is confirmed as a low load condition based on the load change, the compressor operating mode used to instruct the variable-frequency compressor to perform compression and the fixed-frequency compressor to stop compression.

In an embodiment, the determining a matching compressor operating mode based on the load change includes: making, if the load change is greater than a load stability value, the compressor operating mode used to instruct the fixed-frequency compressor to have a workload greater than the variable-frequency compressor; and making, if the load change is less than the load stability value, the compressor operating mode used to instruct the variable-frequency compressor to have a workload greater than the fixed-frequency compressor.

In a second aspect, the present invention further provides a refrigeration control device for a liquid cooling system, applied to a controller of the liquid cooling system. The liquid cooling system further includes a fixed-frequency compressor and a variable-frequency compressor both connected to the controller and configured to compress a refrigerant. The device including: a temperature acquisition module configured to acquire an operating environment temperature of the liquid cooling system; a load change acquisition module configured to acquire a load change in the liquid cooling system in response to confirming, based on the operating environment temperature, that a compression refrigeration condition is currently satisfied; and an operating mode determination module configured to determine a matching compressor operating mode based on the load change. The compressor operating mode is used to instruct the fixed-frequency compressor and the variable-frequency compressor to cooperate to compress the refrigerant until the compressed refrigerant enters a condenser to complete a refrigeration cycle.

In a third aspect, the present invention further provides a liquid cooling system, including a controller, and a fixed-frequency compressor and a variable-frequency compressor both configured to compress a refrigerant and connected to the controller. The controller is configured to perform the following steps: acquiring an operating environment temperature of the liquid cooling system; acquiring a load change in the liquid cooling system in response to confirming, based on the operating environment temperature, that a compression refrigeration condition is currently satisfied; and determining a matching compressor operating mode based on the load change; the compressor operating mode being used to instruct the fixed-frequency compressor and the variable-frequency compressor to cooperate to compress the refrigerant until the compressed refrigerant enters a condenser to complete a refrigeration cycle.

In a fourth aspect, the present invention further provides a computer-readable storage medium having a computer program stored thereon. The computer program, when executed by a processor, causes the processor to implement the following steps: acquiring an operating environment temperature of the liquid cooling system; acquiring a load change in the liquid cooling system in response to confirming, based on the operating environment temperature, that a compression refrigeration condition is currently satisfied; and determining a matching compressor operating mode based on the load change. The compressor operating mode is used to instruct the fixed-frequency compressor and the variable-frequency compressor to cooperate to compress the refrigerant until the compressed refrigerant enters a condenser to complete a refrigeration cycle.

According to the refrigeration control method and device for the liquid cooling system, the system, and the storage medium described above, whether the refrigeration condition is satisfied is determined by acquiring the operating environment temperature of the liquid cooling system, thereby obtaining a real-time operating state. The load change in the liquid cooling system is acquired when the refrigeration condition is satisfied, and corresponding compressor operating modes are selected based on different load changes to properly compress the refrigerant until the compressed refrigerant enters the condenser to complete the refrigeration cycle. As a result, it achieves a technical effect of reducing the operating power consumption of devices of the energy storage system, thereby improving the overall energy efficiency of the energy storage system.

### BRIEF DESCRIPTION OF THE DRAWINGS

FIG. 1 is a schematic structural diagram illustrating a liquid cooling system according to an embodiment.
FIG. 2 is a flow diagram illustrating a refrigeration control method for a liquid cooling system according to an embodiment.
FIG. 3 is a flow diagram illustrating steps of determining a refrigeration manner according to an embodiment.
FIG. 4 is a flow diagram illustrating a refrigeration control method for a liquid cooling system according to another embodiment.
FIG. 5 is a block diagram illustrating a configuration of a refrigeration control device for a liquid cooling system according to an embodiment.
FIG. 6 is a schematic diagram illustrating an internal configuration of a computer apparatus according to an embodiment.

### DETAILED DESCRIPTION

In order to make the objectives, technical solutions, and advantages of the present invention clearer, the present invention will be further described in detail below with reference to the accompanying drawings and embodiments. It should be understood that specific embodiments described herein are intended only to explain the present invention and are not intend to limit the present invention.

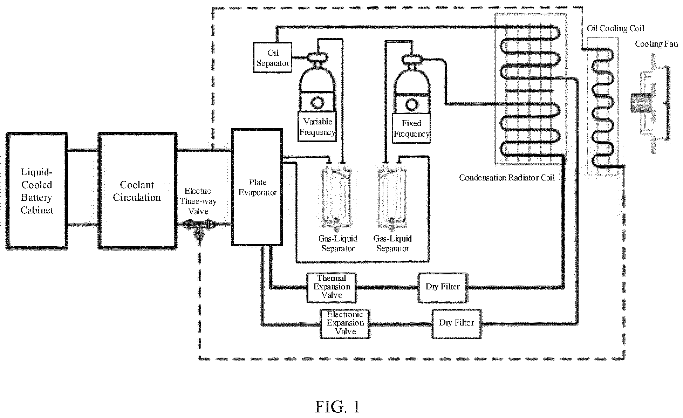

A refrigeration control method for a liquid cooling system provided in embodiments of the present invention may be applied to a liquid cooling system as shown in FIG. 1. A fixed-frequency compressor (referred to as fixed frequency in FIG. 1) and a variable-frequency compressor (referred to as variable frequency in FIG. 1) configured to compress a refrigerant are connected to a controller of the liquid cooling system.

As shown in FIG. 1, the variable-frequency compressor is in communication with a plate evaporator through a gas-liquid separator, and a pipeline between the gas-liquid separator and the plate evaporator may be provided with a temperature sensor, a pressure sensor, a low-pressure gauge (connected to a low-pressure switch), a needle valve, and a return air temperature sensor. For example, the variable-frequency compressor is in communication with an inlet of a condensation radiator coil through an oil separator, and an outlet of the condensation radiator coil is in communication with the plate evaporator sequentially through a dry filter and an electronic expansion valve. A pipeline between the oil separator and the condensation radiator coil may be provided with a high-pressure gauge (connected to a high-pressure switch) and a pressure sensor.

Further, as shown in FIG. 1, an inlet of the fixed-frequency compressor is in communication with the plate evaporator through the gas-liquid separator, an outlet of the fixed-frequency compressor is in communication with the inlet of the condensation radiator coil, and the outlet of the condensation radiator coil is in communication with the plate evaporator sequentially through the dry filter and the electronic expansion valve. A pipeline between the fixed-frequency compressor and the gas-liquid separator may be provided with a low-pressure gauge (connected to a low-pressure switch), and a pipeline between the fixed-frequency compressor and the condensation radiator coil may be provided with a pressure sensor and a high-pressure gauge (connected to a high-pressure switch).

For example, as shown in FIG. 1, a coolant outlet of a coolant circulation system (referred to as coolant circulation in FIG. 1) is in communication with the plate evaporator and an inlet of an oil cooling coil respectively, and an outlet of the oil cooling coil is in communication with a coolant inlet of the coolant circulation system through an electric three-way valve. The electric three-way valve is in communication with the plate evaporator. The coolant circulation system is in communication with a liquid-cooled battery cabinet through a corresponding pipeline.

The condensation radiator coil is arranged adjacent to the oil cooling coil, and the oil cooling coil is arranged opposite to the cooling fan. Further, the temperature sensor and the pressure sensor may collect data on operating environment temperature and data on load change in the liquid cooling system required to be processed by the controller of the liquid cooling system. The controller of the liquid cooling system acquires the operating environment temperature of the liquid cooling system collected by the temperature sensor, and acquires, in response to confirming, based on the operating environment temperature, that a compression refrigeration condition is currently satisfied, the load change in the liquid cooling system collected by the pressure sensor. The controller of the liquid cooling system determines a matching compressor operating mode based on the load change. The compressor operating mode is used to instruct the fixed-frequency compressor and the variable-frequency compressor to cooperate to compress the refrigerant until the compressed refrigerant enters a condenser to complete a refrigeration cycle.

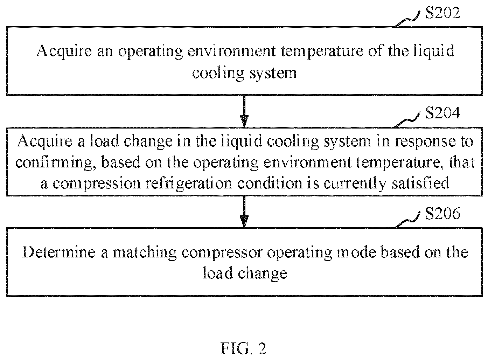

In an embodiment, as shown in FIG. 2, a refrigeration control method for a liquid cooling system is provided. For example, the method is applied to the controller of the liquid cooling system in FIG. 1, and includes the following steps.

In step S202, an operating environment temperature of the liquid cooling system is acquired.

The liquid cooling system is divided into refrigerant circulation (i.e., outer circulation) and coolant circulation (i.e., inner circulation). The outer circulation provides a cold source, and a heater may be configured in the inner circulation to heat the coolant in advance when starting at a low temperature. The inner circulation and the outer circulation carry out heat exchange through a plate heat exchanger.

The operating environment temperature refers to an environment temperature of a device or system under a normal operating state. For some electronic devices, mechanical devices, air conditioning systems, or the like, the operating environment temperature may affect performance, lifetime, or stability thereof.

Optionally, the controller of the liquid cooling system acquires a real-time operating environment temperature of the liquid cooling system.

In step S204, a load change in the liquid cooling system is acquired in response to confirming, based on the operating environment temperature, that a compression refrigeration condition is currently satisfied.

The compression refrigeration condition may include a current operating environment temperature of the liquid cooling system exceeding a preset operating environment temperature threshold. Compression refrigeration refers to a common refrigeration manner in which the refrigerant is compressed into a high-temperature and high-pressure gas through a compressor, is cooled into a liquid through a condenser, and then is expanded into a low-temperature and low-pressure gas through an expansion valve, so as to achieve a refrigeration effect.

The load change is a change in a workload or load undertaken by the device or system. In fields such as industrial production or energy supply, load changes are inevitable because production requirements or user requirements change over time. The load change may have an influence on the operation of the device or system, and an operating mode or operating parameter of the device may be required to be adjusted or optimized.

Optionally, the controller of the liquid cooling system acquires the load change in the liquid cooling system in response to the current operating environment temperature of the liquid cooling system meets the compression refrigeration condition. For example, an optimal temperature range for lithium batteries is 10 °C to 35 °C. If the current operating environment temperature of the liquid cooling system exceeds 35 °C, the compression refrigeration condition is satisfied, and the controller of the liquid cooling system acquires a current load change in the liquid cooling system.

In step S206, a matching compressor operating mode is determined based on the load change. The compressor operating mode is used to instruct the fixed-frequency compressor and the variable-frequency compressor to cooperate to compress the refrigerant until the compressed refrigerant enters a condenser to complete a refrigeration cycle.

The fixed-frequency compressor is a compressor with an operating frequency that is fixed and unadjustable, which generally runs at a constant speed and cannot adjust output power based on the load change. Therefore, there may be a waste of energy consumption in the case of a low load.

The variable-frequency compressor is a compressor with an operating frequency that is adjustable based on a load requirement. It can adjust its output power by controlling a speed of a motor to adapt to changes in the load. Compared with the fixed-frequency compressor, the variable-frequency compressor has higher energy efficiency and better load adaptability, and may operate flexibly based on an actual requirement, thereby saving energy.

The condenser refers to an important component in the refrigeration system, and is configured to cool a high-temperature and high-pressure refrigerant gas into a liquid, which generally includes a set of pipelines and radiators, dissipates heat in the refrigerant through a cooling effect of air or water, cools the refrigerant into a liquid state, and provides conditions for the refrigeration cycle. The effect of the condenser directly affects performance and efficiency of the refrigeration system.

Optionally, the controller of the liquid cooling system determines compressor operating modes corresponding to different load changes based on the load changes in the liquid cooling system. The compressor operating mode herein is used to instruct the fixed-frequency compressor and the variable-frequency compressor to cooperate to compress the refrigerant. After compression is completed by the compressor, the refrigerant enters the condenser to complete a refrigeration cycle.

In the refrigeration control method for the liquid cooling system described above, whether the refrigeration condition is satisfied is determined by acquiring the operating environment temperature of the liquid cooling system, thereby obtaining a real-time operating state. The load change in the liquid cooling system is acquired when the refrigeration condition is satisfied, and corresponding compressor operating modes are selected according to different load changes to properly compress the refrigerant until the compressed refrigerant enters the condenser to complete the refrigeration cycle. As a result, it achieves a technical effect of reducing the operating power consumption of devices of the energy storage system, thereby improving the overall energy efficiency of the energy storage system.

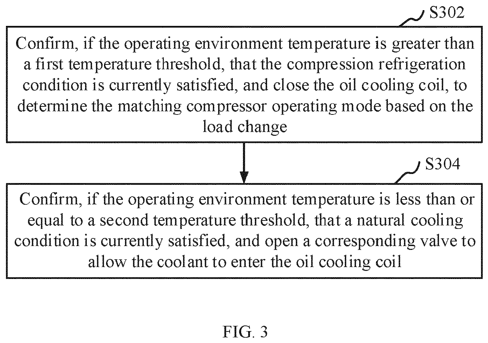

In an embodiment, as shown in FIG. 3, a flow diagram illustrating steps of determining a refrigeration manner is provided. The liquid cooling system further includes an oil cooling coil configured to naturally cool a coolant. The method further includes the following steps.

In step S302, if the operating environment temperature is greater than a first temperature threshold, it is confirmed that the compression refrigeration condition is currently satisfied, and the oil cooling coil is closed, to determine a matching compressor operating mode based on the load change.

The oil cooling coil refers to a device that naturally cools the coolant in the liquid cooling system. The coolant may be synthesized using hydrocarbons as raw materials, catalyzed by special materials and processes, and compounded with high-efficiency antioxidant additives.

Optionally, if the acquired operating environment temperature is greater than the first temperature threshold, it is confirmed that the liquid cooling system currently satisfies the compression refrigeration condition, and the controller of the liquid cooling system closes the oil cooling coil configured to naturally cool the coolant, and determines, based on the load change in the liquid cooling system, the compressor operating mode corresponding to the current load change.

In step S304, if the operating environment temperature is less than or equal to a second temperature threshold, it is confirmed that a natural cooling condition is currently satisfied, and a corresponding valve is opened to allow the coolant to enter the oil cooling coil. The second temperature threshold is less than the first temperature threshold.

Natural cooling means only running a circulation pump and a cooling axial flow fan to take away heat of coolant in a cooling coil by using external cold air.

Optionally, if the acquired operating environment temperature of the liquid cooling system is less than or equal to the second temperature threshold, it is determined that the liquid cooling system currently meets the natural cooling condition, and the controller of the liquid cooling system opens the corresponding valve to allow the coolant to enter the oil cooling coil for natural cooling. The second temperature threshold is less than the first temperature threshold.

In this embodiment, by setting the first temperature threshold and the second temperature threshold, a current environment temperature of the liquid cooling system is determined, and a corresponding mode for refrigeration is determined, thereby achieving effects of refined division of refrigeration modes and reduction of system energy consumption.

In an embodiment, the method further includes: determining, in response to acquisition of an outlet temperature of the coolant, an operating frequency of the variable-frequency compressor based on the outlet temperature of the coolant.

The outlet temperature refers to a temperature of the coolant that increases after absorbing heat transferred from a battery pack in the battery cabinet, that is, a temperature of the coolant when flowing out of the battery cabinet.

Optionally, the controller of the liquid cooling system determines, in response to acquisition of an outlet temperature of the coolant at an outlet of the battery cabinet, an operating frequency of the variable-frequency compressor based on the outlet temperature of the coolant. A value of the outlet temperature may be positively correlated with the operating frequency of the variable-frequency compressor.

In this embodiment, the operating frequency of the variable-frequency compressor is adjusted by determining the outlet temperature of the coolant when flowing out of the battery cabinet, thereby improving a refrigeration effect of the refrigerated refrigerant on the coolant.

In an embodiment, the liquid cooling system further includes a cooling fan configured to cool the oil cooling coil. The method further includes: adjusting an operating speed of the cooling fan based on the load change and the operating environment temperature.

The cooling fan refers to a cooling axial flow fan, which is configured to use external cold air to take away the heat of the coolant in the cooling coil.

Optionally, in a natural cooling mode, the controller of the liquid cooling system adjusts, based on the load change in the liquid cooling system and the operating environment temperature of the liquid cooling system, an operating speed of the cooling fan that uses external cold air to take away the heat of the coolant in the cooling coil. The load change, the operating environment temperature, and the operating speed of the cooling fan may be positively correlated.

In this embodiment, it is defined that the operating speed of the cooling fan may be determined based on the load change and the operating environment temperature of the liquid cooling system in the natural cooling mode, achieving precise refrigeration in the natural cooling mode.

In an embodiment, step S206, that is, determining the matching compressor operating mode based on the load change, includes: making, if a current load condition is confirmed as a high load condition based on the load change, the compressor operating mode used to instruct the fixed-frequency compressor to perform compression and the variable-frequency compressor to stop compression; and making, if the current load condition is confirmed as a low load condition based on the load change, the compressor operating mode used to instruct the variable-frequency compressor to perform compression and the fixed-frequency compressor to stop compression.

The high load condition refers to a situation where the load change in the liquid cooling system is relatively stable or the liquid cooling system operates with a large load.

The low load condition refers to a situation where the load change in the liquid cooling system is great or the liquid cooling system operates with a small load.

Optionally, when determining, based on the acquired load change in the liquid cooling system, that it is the high load condition in which the load change in the liquid cooling system is relatively stable or the liquid cooling system operates with a large load, the controller of the liquid cooling system determines that the compressor operating mode is used to instruct the fixed-frequency compressor to perform compression (which may provide a larger refrigeration capacity to meet a refrigeration requirement) and the variable-frequency compressor to stop compression. When determining, based on the acquired load change in the liquid cooling system, that it is the low load condition in which the load change in the liquid cooling system is great or the liquid cooling system operates with a small load, the controller of the liquid cooling system determines that the compressor operating mode is used to instruct the variable-frequency compressor to perform compression (which may adjust a speed and a refrigeration capacity according to an actual requirement) and the fixed-frequency compressor to stop compression.

In this embodiment, corresponding compressor operating modes are determined according to different load changes in the liquid cooling system, under the high load condition, only the fixed-frequency compressor is used, which meets the refrigeration requirement, and under the low load condition, only the variable-frequency compressor is used to reduce the refrigeration capacity by reducing the speed of the variable-frequency compressor, to save energy. A more reasonable compression refrigeration manner is achieved, which meets the refrigeration requirement and reduces energy consumption of the device.

In an embodiment, step S206, that is, determining the matching compressor operating mode based on the load change, includes: making, if the load change is greater than a load stability value, the compressor operating mode used to instruct the fixed-frequency compressor to have a workload greater than the variable-frequency compressor; and making, if the load change is less than the load stability value, the compressor operating mode used to instruct the variable-frequency compressor to have a workload greater than the fixed-frequency compressor.

The workload refers to a refrigeration capacity of the fixed-frequency compressor or the variable-frequency compressor.

Optionally, when the load change acquired by the controller of the liquid cooling system is greater than the load stability value, the compressor operating mode is used to indicate that the refrigeration capacity of the fixed-frequency compressor is greater than the refrigeration capacity of the variable-frequency compressor. When the load change acquired by the controller of the liquid cooling system is less than the load stability value, the compressor operating mode is used to indicate that the refrigeration capacity of the variable-frequency compressor is greater than the refrigeration capacity of the fixed-frequency compressor.

In this embodiment, the corresponding compressor operating modes under different load changes are further limited. The variable-frequency compressor and the fixed-frequency compressor operate in combination, but in different load modes, the fixed-frequency compressor and the variable-frequency compressor are adjusted to correspond to different workloads, further making the refrigeration manner more reasonable and reducing energy efficiency of the device.

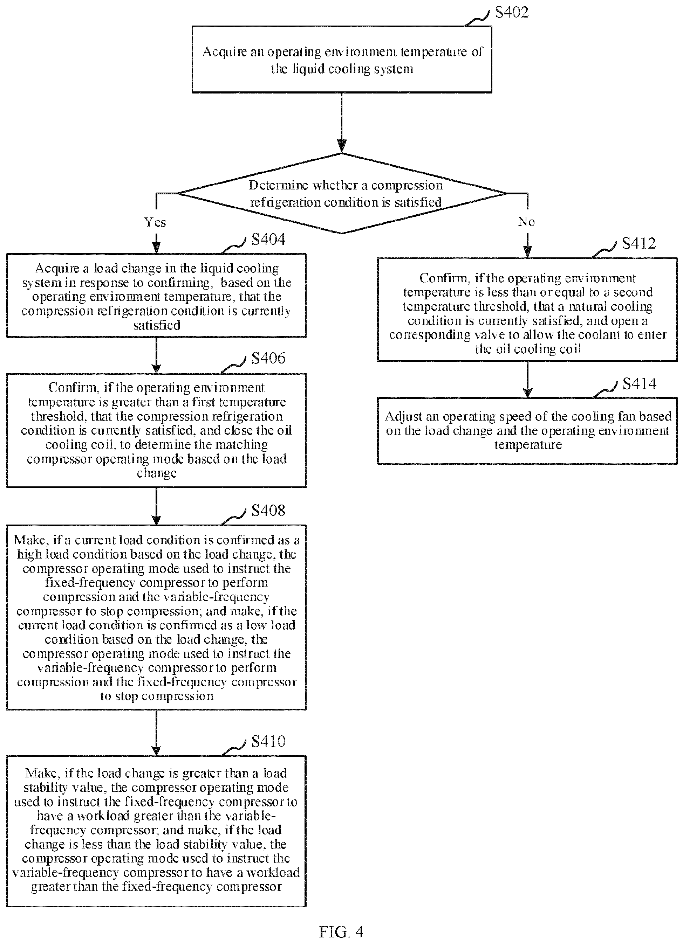

In an embodiment, as shown in FIG. 4, detailed steps of the refrigeration control method for the liquid cooling system are provided, which are specifically as follows.

In step S402, an operating environment temperature of the liquid cooling system is acquired.

Specifically, the controller of the liquid cooling system acquires a real-time operating environment temperature of the liquid cooling system.

In step S404, a load change in the liquid cooling system is acquired in response to confirming, based on the operating environment temperature, that a compression refrigeration condition is currently satisfied.

Specifically, the controller of the liquid cooling system acquires the load change in the liquid cooling system in response to the current operating environment temperature of the liquid cooling system meets the compression refrigeration condition. For example, an optimal temperature range for lithium batteries is 10 °C to 35 °C. If the current operating environment temperature of the liquid cooling system exceeds 35 °C, the compression refrigeration condition is satisfied, and the controller of the liquid cooling system acquires a current load change in the liquid cooling system.

In step S406, if the operating environment temperature is greater than a first temperature threshold, it is confirmed that the compression refrigeration condition is currently satisfied, and the oil cooling coil is closed, to determine a matching compressor operating mode based on the load change.

Specifically, if the acquired operating environment temperature is greater than the first temperature threshold, it is confirmed that the liquid cooling system currently meets the compression refrigeration condition, and the controller of the liquid cooling system closes the oil cooling coil configured to naturally cool the coolant, and determines, based on the load change in the liquid cooling system, the compressor operating mode corresponding to the current load change.

In step S408, if a current load condition is confirmed as a high load condition based on the load change, the compressor operating mode is used to instruct the fixed-frequency compressor to perform compression and the variable-frequency compressor to stop compression; and if the current load condition is confirmed as a low load condition based on the load change, the compressor operating mode is used to instruct the variable-frequency compressor to perform compression and the fixed-frequency compressor to stop compression.

Specifically, when determining, based on the acquired load change in the liquid cooling system, that it is the high load condition in which the load change in the liquid cooling system is relatively stable or the liquid cooling system operates with a large load, the controller of the liquid cooling system determines that the compressor operating mode is used to instruct the fixed-frequency compressor to perform compression (which may provide a larger refrigeration capacity to meet a refrigeration requirement) and the variable-frequency compressor to stop compression. When determining, based on the acquired load change in the liquid cooling system, that it is the low load condition in which the load change in the liquid cooling system is great or the liquid cooling system operates with a small load, the controller of the liquid cooling system determines that the compressor operating mode is used to instruct the variable-frequency compressor to perform compression (which may adjust a speed and a refrigeration capacity according to an actual requirement) and the fixed-frequency compressor to stop compression.

In step S410, if the load change is greater than a load stability value, the compressor operating mode is used to instruct the fixed-frequency compressor to have a workload greater than the variable-frequency compressor; and if the load change is less than the load stability value, the compressor operating mode is used to instruct the variable-frequency compressor to have a workload greater than the fixed-frequency compressor.

Specifically, when the load change acquired by the controller of the liquid cooling system is greater than the load stability value, the compressor operating mode is used to indicate that the refrigeration capacity of the fixed-frequency compressor is greater than the refrigeration capacity of the variable-frequency compressor; and when the load change acquired by the controller of the liquid cooling system is less than the load stability value, the compressor operating mode is used to indicate that the refrigeration capacity of the variable-frequency compressor is greater than the refrigeration capacity of the fixed-frequency compressor.

In step S412, if the operating environment temperature is less than or equal to a second temperature threshold, it is confirmed that a natural cooling condition is currently satisfied, and a corresponding valve is opened to allow the coolant to enter the oil cooling coil; wherein the second temperature threshold is less than the first temperature threshold.

Specifically, if the acquired operating environment temperature of the liquid cooling system is less than or equal to the second temperature threshold, it is determined that the liquid cooling system currently meets the natural cooling condition, and the controller of the liquid cooling system opens the corresponding valve to allow the coolant to enter the oil cooling coil for natural cooling. The second temperature threshold is less than the first temperature threshold.

In step S414, an operating speed of the cooling fan is adjusted based on the load change and the operating environment temperature.

Specifically, in a natural cooling mode, the controller of the liquid cooling system adjusts, based on the load change in the liquid cooling system and the operating environment temperature of the liquid cooling system, an operating speed of the cooling fan that uses external cold air to take away the heat of the coolant in the cooling coil. The load change, the operating environment temperature, and the operating speed of the cooling fan may be positively correlated.

In this embodiment, whether the refrigeration condition is satisfied is determined by acquiring the operating environment temperature of the liquid cooling system, thereby obtaining a real-time operating state. The load change in the liquid cooling system is acquired when the refrigeration condition is satisfied, and corresponding compressor operating modes are selected according to different load changes to properly compress the refrigerant until the compressed refrigerant enters the condenser to complete the refrigeration cycle. When the compression refrigeration condition is not satisfied, the natural cooling mode with lower energy consumption is used for refrigeration. As a result, it achieves a technical effect of reducing the operating power consumption of devices of the energy storage system, thereby improving the overall energy efficiency of the energy storage system.

In an embodiment, a liquid cooling system is provided, including a controller, and a fixed-frequency compressor and a variable-frequency compressor both configured to compress a refrigerant and connected to the controller.

The controller is configured to perform steps of any one of the methods in the above embodiments.

In an embodiment, each of the fixed-frequency compressor and the variable-frequency compressor includes a scroll compressor.

It should be understood that, although the steps in the flowcharts as referred to in the above embodiments are shown in sequence as indicated by the arrows, the steps are not necessarily performed in the order indicated by the arrows. Unless otherwise clearly specified herein, the steps are performed without any strict sequence limitation, and the steps may be performed in other orders. In addition, at least some steps in the flowcharts as referred to in the above embodiments may include a plurality of steps or a plurality of stages, and such steps or stages are not necessarily performed at a same moment, and may be performed at different moments. The steps or stages are not necessarily performed in sequence, and the steps or stages and at least some of other steps or steps or stages of other steps may be performed in turn or alternately.

Based on a same inventive concept, embodiments of the present invention further provide a refrigeration control device for a liquid cooling system configured to implement the refrigeration control method for the liquid cooling system as referred to above. The implementation solution provided by the device to solve the problem is similar to the implementation solution described in the above method. Therefore, specific limitations in the embodiments of one or more refrigeration control devices provided below may be obtained with reference to the limitations on the refrigeration control method. Details are not described herein.

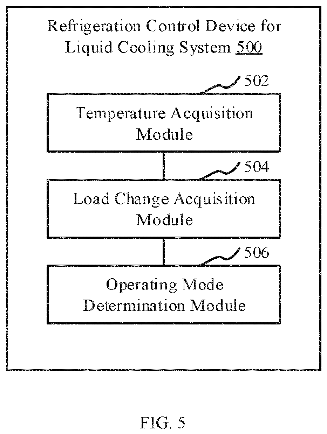

In an embodiment, as shown in FIG. 5, a refrigeration control device for a liquid cooling system 500 is provided, including a temperature acquisition module 502, a load change acquisition module 504, and an operating mode determination module 506. The temperature acquisition module 502 is configured to acquire an operating environment temperature of the liquid cooling system. The load change acquisition module 504 is configured to acquire a load change in the liquid cooling system in response to confirming, based on the operating environment temperature, that a compression refrigeration condition is currently satisfied. The operating mode determination module 506 is configured to determine a matching compressor operating mode based on the load change. The compressor operating mode is used to instruct the fixed-frequency compressor and the variable-frequency compressor to cooperate to compress the refrigerant until the compressed refrigerant enters a condenser to complete a refrigeration cycle.

Further, in an embodiment, the operating mode determination module 506 is further configured to: confirm, if the operating environment temperature is greater than a first temperature threshold, that the compression refrigeration condition is currently satisfied, and close the oil cooling coil, to determine the matching compressor operating mode based on the load change; and confirm, if the operating environment temperature is less than or equal to a second temperature threshold, that a natural cooling condition is currently satisfied, and open a corresponding valve to allow the coolant to enter the oil cooling coil. The second temperature threshold is less than the first temperature threshold.

Further, in an embodiment, the operating mode determination module 506 is further configured to determine, in response to acquisition of an outlet temperature of the coolant, an operating frequency of the variable-frequency compressor based on the outlet temperature of the coolant.

Further, in an embodiment, the operating mode determination module 506 is further configured to adjust an operating speed of the cooling fan based on the load change and the operating environment temperature.

Further, in an embodiment, the operating mode determination module 506 is further configured to: make, if a current load condition is confirmed as a high load condition based on the load change, the compressor operating mode used to instruct the fixed-frequency compressor to perform compression and the variable-frequency compressor to stop compression; and make, if the current load condition is confirmed as a low load condition based on the load change, the compressor operating mode used to instruct the variable-frequency compressor to perform compression and the fixed-frequency compressor to stop compression.

Further, in an embodiment, the operating mode determination module 506 is further configured to: make, if the load change is greater than a load stability value, the compressor operating mode used to instruct the fixed-frequency compressor to have a workload greater than the variable-frequency compressor; and make, if the load change is less than the load stability value, the compressor operating mode used to instruct the variable-frequency compressor to have a workload greater than the fixed-frequency compressor.

Each module in the above refrigeration control device 500 may be implemented entirely or partially by software, hardware, or a combination thereof. The foregoing modules may be built in or independent of a processor of a computer apparatus in a form of hardware, or may be stored in a memory of the computer apparatus in a form of software, so that the processor invokes and performs an operation corresponding to each of the foregoing modules.

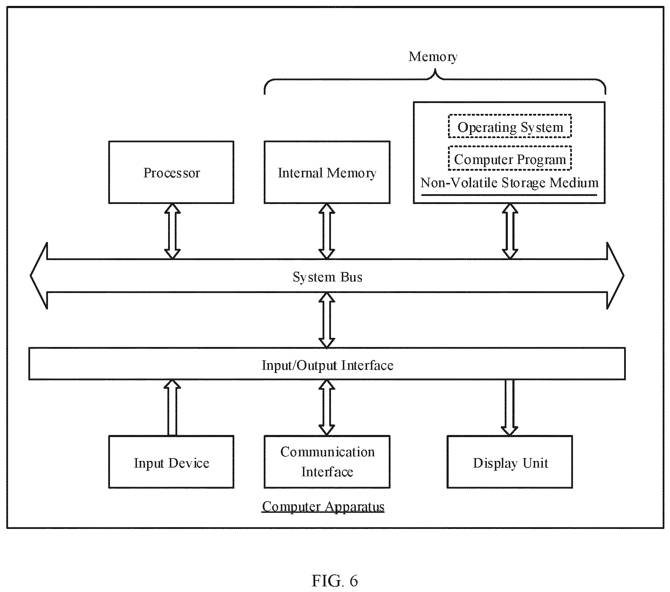

In an embodiment, a computer apparatus is provided. The computer apparatus may be a server. An exemplary internal configuration of the computer apparatus is shown in FIG. 6. The computer apparatus includes a processor, a memory, an input/output (I/O) interface, and a communication interface. The processor, the memory, and the I/O interface are connected through a system bus. The communication interface is connected to the system bus through the I/O interface. The processor of the computer apparatus is configured to provide computing and control capabilities. The memory of the computer apparatus includes a non-volatile storage medium and an internal memory. The non-volatile storage medium stores an operating system, a computer program, and a database. The internal memory provides an environment for running of the operating system and the computer program in the non-volatile storage medium. The database of the computer apparatus is used to store environment temperature data and load change data of the liquid cooling system. The I/O interface of the computer apparatus is used to exchange information between the processor and an external device. The communication interface of the computer apparatus is used to communicate with an external terminal through a network connection. The computer program is executed by the processor to implement a refrigeration control method for a liquid cooling system.

Those of ordinary skill in the art may understand that the structure shown in FIG. 6 is merely a block diagram illustrating a partial structure related to a solution in the present invention, and does not constitute a limitation to the computer apparatus to which the solution in the present invention is applied. Specifically, the computer apparatus may include more or fewer components than those shown in the figure, or have some components combined, or have a different component deployment.

In an embodiment, a computer apparatus is further provided, including a memory and a processor. The memory stores a computer program. The processor, when executing the computer program, implements steps in the above method embodiments.

In an embodiment, a computer-readable storage medium is provided, having a computer program stored thereon. The computer program, when executed by a processor, causes the processor to implement steps in the above method embodiments.

In an embodiment, a computer program product is provided, including a computer program. The computer program, when executed by a processor, causes the processor to implement steps in the above method embodiments.

Those of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. Any reference to a memory, storage, a database, or another medium used in the embodiments provided the present invention may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM) or an external cache. By way of description and not limitation, the RAM may be in various forms, such as a static random access memory (SRAM), a dynamic random access memory (DRAM), or the like. The database as referred to in the embodiments provided in the present invention may include at least one of a relational database and a non-relational database. The non-relational database may include a blockchain-based distributed database, but is not limited thereto. The processor as referred to in the embodiments provided in the present invention may be a general-purpose processor, a central processing unit, a graphics processor, a digital signal processor, a programmable logic device, a data processing logic device based on quantum computing, or the like, but is not limited thereto.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present invention, and the descriptions are relatively specific and detailed, but they should not be construed as limiting the scope of the present invention.

## Claims

1. A refrigeration control method for a liquid cooling system comprising a controller, a fixed-frequency compressor, a variable-frequency compressor and an oil cooling coil, both the fixed-frequency compressor and the variable-frequency compressor being connected to the controller and configured to compress a refrigerant, the oil cooling coil being connected to a coolant circulation system of the liquid cooling system and configured to naturally cool a coolant, the method being implemented by the controller and comprising:
acquiring an operating environment temperature of the liquid cooling system (S202);
acquiring a load change in the liquid cooling system in response to confirming, based on the operating environment temperature, that a compression refrigeration condition is currently satisfied (S204); and
determining a matching compressor operating mode based on the load change (S206), the compressor operating mode being used to instruct the fixed-frequency compressor and the variable-frequency compressor to cooperate to compress the refrigerant until the compressed refrigerant enters a condenser to complete a refrigeration cycle;
wherein the method further comprises:
confirming, if the operating environment temperature is greater than a first temperature threshold, that the compression refrigeration condition is currently satisfied, and closing the oil cooling coil, to determine the matching compressor operating mode based on the load change (S302); and
confirming, if the operating environment temperature is less than or equal to a second temperature threshold less than the first temperature threshold, that a natural cooling condition is currently satisfied, and opening a corresponding valve to allow the coolant to enter the oil cooling coil (S304); and
wherein the determining the matching compressor operating mode based on the load change comprises:
making, if the load change is greater than a load stability value, the compressor operating mode used to instruct the fixed-frequency compressor to have a workload greater than the variable-frequency compressor; and
making, if the load change is less than the load stability value, the compressor operating mode used to instruct the variable-frequency compressor to have a workload greater than the fixed-frequency compressor.

2. The method according to claim 1, further comprising:
determining, in response to acquisition of an outlet temperature of the coolant, an operating frequency of the variable-frequency compressor based on the outlet temperature of the coolant.

3. The method according to claim 1 or 2, wherein the liquid cooling system further comprises a cooling fan configured to cool the oil cooling coil, and the method further comprises:
adjusting an operating speed of the cooling fan based on the load change and the operating environment temperature.

4. The method according to any one of claims 1 to 3, wherein the determining the matching compressor operating mode based on the load change comprises:
making, if a current load condition is confirmed as a high load condition based on the load change, the compressor operating mode used to instruct the fixed-frequency compressor to perform compression and the variable-frequency compressor to stop compression; and
making, if the current load condition is confirmed as a low load condition based on the load change, the compressor operating mode used to instruct the variable-frequency compressor to perform compression and the fixed-frequency compressor to stop compression.

5. A refrigeration control device (500) for a liquid cooling system comprising a controller, a fixed-frequency compressor, a variable-frequency compressor and an oil cooling coil, both the fixed-frequency compressor and the variable-frequency compressor being connected to the controller and configured to compress a refrigerant, the oil cooling coil being connected to a coolant circulation system of the liquid cooling system and configured to naturally cool a coolant, the device (500) being applied to the controller and comprising:
a temperature acquisition module (502) configured to acquire an operating environment temperature of the liquid cooling system;
a load change acquisition module (504) configured to acquire a load change in the liquid cooling system in response to confirming, based on the operating environment temperature, that a compression refrigeration condition is currently satisfied; and
an operating mode determination module (506) configured to determine a matching compressor operating mode based on the load change, the compressor operating mode being used to instruct the fixed-frequency compressor and the variable-frequency compressor to cooperate to compress the refrigerant until the compressed refrigerant enters a condenser to complete a refrigeration cycle;
wherein the load change acquisition module (504) is further configured to:
confirm, if the operating environment temperature is greater than a first temperature threshold, that the compression refrigeration condition is currently satisfied, and close the oil cooling coil, to determine the matching compressor operating mode based on the load change; and
confirm, if the operating environment temperature is less than or equal to a second temperature threshold less than the first temperature threshold, that a natural cooling condition is currently satisfied, and open a corresponding valve to allow the coolant to enter the oil cooling coil; and
wherein the operating mode determination module (506) is further configured to:
make, if the load change is greater than a load stability value, the compressor operating mode used to instruct the fixed-frequency compressor to have a workload greater than the variable-frequency compressor; and
make, if the load change is less than the load stability value, the compressor operating mode used to instruct the variable-frequency compressor to have a workload greater than the fixed-frequency compressor.

6. The device (500) of claim 5, wherein the operating mode determination module (506) is further configured to determine, in response to acquisition of an outlet temperature of the coolant, an operating frequency of the variable-frequency compressor based on the outlet temperature of the coolant.

7. The device (500) of claim 5 or 6, wherein the liquid cooling system further comprises a cooling fan configured to cool the oil cooling coil, and the operating mode determination module (506) is further configured to adjust an operating speed of the cooling fan based on the load change and the operating environment temperature.

8. The device (500) of any one of claims 5 to 7, wherein the operating mode determination module (506) is further configured to:
make, if a current load condition is confirmed as a high load condition based on the load change, the compressor operating mode used to instruct the fixed-frequency compressor to perform compression and the variable-frequency compressor to stop compression; and
make, if the current load condition is confirmed as a low load condition based on the load change, the compressor operating mode used to instruct the variable-frequency compressor to perform compression and the fixed-frequency compressor to stop compression.

9. A liquid cooling system, comprising a controller, a fixed-frequency compressor, a variable-frequency compressor and an oil cooling coil, both the fixed-frequency compressor and the variable-frequency compressor both being configured to compress a refrigerant and connected to the controller, the oil cooling coil being connected to a coolant circulation system of the liquid cooling system and configured to naturally cool a coolant, wherein the controller is configured to perform the method of any one of claims 1 to 4.

10. The liquid cooling system according to claim 9, wherein each of the fixed-frequency compressor and the variable-frequency compressor comprises a scroll compressor.

11. A computer-readable storage medium having a computer program stored thereon, wherein the computer program, when executed by a processor, causes the processor to implement the method of any one of claims 1 to 4.

12. A computer program product comprising a computer program, wherein the computer program, when executed by a processor, causes the processor to implement the method of any one of claims 1 to 4.

## Patentansprüche

1. Kühlsteuerungsverfahren für ein Flüssigkeitskühlsystem, umfassend eine Steuerung, einen Verdichter mit fester Frequenz, einen Verdichter mit variabler Frequenz und eine Ölkühlschlange, wobei sowohl der Verdichter mit fester Frequenz als auch der Verdichter mit variabler Frequenz mit der Steuerung verbunden und ausgelegt sind, um ein Kühlmittel zu verdichten, wobei die Ölkühlschlange mit einem Kühlmittelkreislaufsystem des Flüssigkeitskühlsystems verbunden und ausgelegt ist, um ein Kühlmittel auf natürliche Weise zu kühlen, wobei das Verfahren durch die Steuerung implementiert wird und Folgendes umfasst:
Erfassen einer Betriebsumgebungstemperatur des Flüssigkeitskühlsystems (S202);
Erfassen einer Laständerung in dem Flüssigkeitskühlsystem als Reaktion auf die Bestätigung, auf Grundlage der Betriebsumgebungstemperatur, dass ein Verdichtungskühlzustand derzeit erfüllt ist (S204); und
Bestimmen eines passenden Verdichterbetriebsmodus auf Grundlage der Laständerung (S206), wobei der Verdichterbetriebsmodus verwendet wird, um den Verdichter mit fester Frequenz und den Verdichter mit variabler Frequenz anzuweisen, zusammenzuarbeiten, um das Kühlmittel zu verdichten, bis das verdichtete Kühlmittel in einen Kondensator eintritt, um einen Kühlzyklus zu vervollständigen;
wobei das Verfahren ferner umfasst:
wenn die Betriebsumgebungstemperatur größer als ein erster Temperaturschwellenwert ist, Bestätigen, dass der Verdichtungskühlzustand derzeit erfüllt ist, und
Schließen der Ölkühlschlange, um den passenden Verdichterbetriebsmodus auf Grundlage der Laständerung zu bestimmen (S302); und
wenn die Betriebsumgebungstemperatur kleiner oder gleich einem zweiten Temperaturschwellenwert kleiner als der erste Temperaturschwellenwert ist, Bestätigen, dass ein natürlicher Kühlzustand derzeit erfüllt ist, und Öffnen eines entsprechenden Ventils, damit das Kühlmittel in die Ölkühlschlange eintreten kann (S304); und
wobei das Bestimmen des passenden Verdichterbetriebsmodus auf Grundlage der Laständerung Folgendes umfasst:
wenn die Laständerung größer als ein Laststabilitätswert ist, Veranlassen, dass der Verdichterbetriebsmodus verwendet wird, um den Verdichter mit fester Frequenz anzuweisen, eine Arbeitslast aufzuweisen, die größer als der Verdichter mit variabler Frequenz ist; und
wenn die Laständerung kleiner als der Laststabilitätswert ist, Veranlassen, dass der Verdichterbetriebsmodus verwendet wird, um den Verdichter mit variabler Frequenz anzuweisen, eine Arbeitslast aufzuweisen, die größer als der Verdichter mit fester Frequenz ist.

2. Verfahren nach Anspruch 1, ferner umfassend:
Bestimmen, als Reaktion auf die Erfassung einer Austrittstemperatur des Kühlmittels, einer Betriebsfrequenz des Verdichters mit variabler Frequenz auf Grundlage der Austrittstemperatur des Kühlmittels.

3. Verfahren nach Anspruch 1 oder 2, wobei das Flüssigkeitskühlsystem ferner ein Kühlgebläse umfasst, das dazu ausgelegt ist, die Ölkühlschlange zu kühlen, und das Verfahren ferner Folgendes umfasst:
Einstellen einer Betriebsdrehzahl des Kühlgebläses auf Grundlage der Laständerung und der Betriebsumgebungstemperatur.

4. Verfahren nach einem der Ansprüche 1 bis 3, wobei das Bestimmen des passenden Verdichterbetriebsmodus auf Grundlage der Laständerung Folgendes umfasst:
wenn ein aktueller Lastzustand als ein hoher Lastzustand auf Grundlage der Laständerung bestätigt wird, Veranlassen, dass der Verdichterbetriebsmodus verwendet wird, um den Verdichter mit fester Frequenz anzuweisen, die Verdichtung durchzuführen und den Verdichter mit variabler Frequenz die Verdichtung zu stoppen; und
wenn der aktuelle Lastzustand als ein niedriger Lastzustand auf Grundlage der Laständerung bestätigt wird, Veranlassen, dass der Verdichterbetriebsmodus verwendet wird, um den Verdichter mit variabler Frequenz anzuweisen, die Verdichtung durchzuführen und den Verdichter mit variabler Frequenz die Verdichtung zu stoppen.

5. Kühlsteuerungsvorrichtung (500) für ein Flüssigkeitskühlsystem, umfassend eine Steuerung, einen Verdichter mit fester Frequenz, einen Verdichter mit variabler Frequenz und eine Ölkühlschlange, wobei sowohl der Verdichter mit fester Frequenz als auch der Verdichter mit variabler Frequenz mit der Steuerung verbunden und ausgelegt sind, um ein Kühlmittel zu verdichten, wobei die Ölkühlschlange mit einem Kühlmittelkreislaufsystem des Flüssigkeitskühlsystems verbunden und ausgelegt ist, um ein Kühlmittel auf natürliche Weise zu kühlen, wobei die Vorrichtung (500) auf die Steuerung angewandt wird und Folgendes umfasst:
ein Temperaturerfassungsmodul (502), das dazu ausgelegt ist, eine Betriebsumgebungstemperatur des Flüssigkeitskühlsystems zu erfassen;
ein Laständerungserfassungsmodul (504), das dazu ausgelegt ist, eine Laständerung in dem Flüssigkeitskühlsystem als Reaktion darauf zu erfassen, dass auf Grundlage der Betriebsumgebungstemperatur bestätigt wird, dass ein Verdichtungskühlzustand derzeit erfüllt ist; und
ein Betriebsmodusbestimmungsmodul (506), das dazu ausgelegt ist, einen passenden Verdichterbetriebsmodus auf Grundlage der Laständerung zu bestimmen, wobei der Verdichterbetriebsmodus verwendet wird, um den Verdichter mit fester Frequenz und den Verdichter mit variabler Frequenz anzuweisen, zusammenzuarbeiten, um das Kühlmittel zu verdichten, bis das verdichtete Kühlmittel in einen Kondensator eintritt, um einen Kühlzyklus zu vervollständigen;
wobei das Laständerungserfassungsmodul (504) ferner ausgelegt ist zum:
wenn die Betriebsumgebungstemperatur größer als ein erster Temperaturschwellenwert ist, Bestätigen, dass der Verdichtungskühlzustand derzeit erfüllt ist, und Schließen der Ölkühlschlange, um den passenden Verdichterbetriebsmodus auf Grundlage der Laständerung zu bestimmen; und
wenn die Betriebsumgebungstemperatur kleiner oder gleich einem zweiten Temperaturschwellenwert kleiner als der erste Temperaturschwellenwert ist, Bestätigen, dass ein natürlicher Kühlzustand derzeit erfüllt ist, und Öffnen eines entsprechenden Ventils, damit das Kühlmittel in die Ölkühlschlange eintreten kann; und
wobei das Betriebsmodusbestimmungsmodul (506) ferner zu Folgendem ausgelegt ist:
wenn die Laständerung größer als ein Laststabilitätswert ist, Veranlassen, dass der Verdichterbetriebsmodus verwendet wird, um den Verdichter mit fester Frequenz anzuweisen, eine Arbeitslast aufzuweisen, die größer als der Verdichter mit variabler Frequenz ist; und
wenn die Laständerung kleiner als der Laststabilitätswert ist, Veranlassen, dass der Verdichterbetriebsmodus verwendet wird, um den Verdichter mit variabler Frequenz anzuweisen, eine Arbeitslast aufzuweisen, die größer als der Verdichter mit fester Frequenz ist.

6. Vorrichtung (500) nach Anspruch 5, wobei das Betriebsmodusbestimmungsmodul (506) ferner dazu ausgelegt ist, als Reaktion auf die Erfassung einer Austrittstemperatur des Kühlmittels, eine Betriebsfrequenz des Verdichters mit variabler Frequenz auf Grundlage der Austrittstemperatur des Kühlmittels zu bestimmen.

7. Vorrichtung (500) nach Anspruch 5 oder 6, wobei das Flüssigkeitskühlsystem ferner ein Kühlgebläse umfasst, das dazu ausgelegt ist, die Ölkühlschlange zu kühlen, und das Betriebsmodusbestimmungsmodul (506) ferner dazu ausgelegt ist, eine Betriebsdrehzahl des Kühlgebläses auf Grundlage der Laständerung und der Betriebsumgebungstemperatur einzustellen.

8. Vorrichtung (500) nach einem der Ansprüche 5 bis 7, wobei das Betriebsmodusbestimmungsmodul (506) ferner zu Folgendem ausgelegt ist:
wenn ein aktueller Lastzustand als ein hoher Lastzustand auf Grundlage der Laständerung bestätigt wird, Veranlassen, dass der Verdichterbetriebsmodus verwendet wird, um den Verdichter mit fester Frequenz anzuweisen, die Verdichtung durchzuführen, und den Verdichter mit variabler Frequenz die Verdichtung zu stoppen; und
wenn der aktuelle Lastzustand als ein niedriger Lastzustand auf Grundlage der Laständerung bestätigt wird, Veranlassen, dass der Verdichterbetriebsmodus verwendet wird, um den Verdichter mit variabler Frequenz anzuweisen, die Verdichtung durchzuführen und den Verdichter mit variabler Frequenz die Verdichtung zu stoppen.

9. Flüssigkeitskühlsystem, umfassend eine Steuerung, einen Verdichter mit fester Frequenz, einen Verdichter mit variabler Frequenz und eine Ölkühlschlange, wobei sowohl der Verdichter mit fester Frequenz als auch der Verdichter mit variabler Frequenz beide dazu ausgelegt sind, ein Kühlmittel zu verdichten und mit der Steuerung verbunden sind, wobei die Ölkühlschlange mit einem Kühlmittelkreislaufsystem des Flüssigkeitskühlsystems verbunden ist und ausgelegt ist, um ein Kühlmittel auf natürliche Weise zu kühlen, wobei die Steuerung dazu ausgelegt ist, das Verfahren nach einem der Ansprüche 1 bis 4 durchzuführen.

10. Flüssigkeitskühlsystem nach Anspruch 9, wobei der Verdichter mit fester Frequenz und der Verdichter mit variabler Frequenz jeweils einen Spiralverdichter umfassen.

11. Computerlesbares Speichermedium mit einem darauf gespeicherten Computerprogramm, wobei das Computerprogramm, wenn es von einem Prozessor ausgeführt wird, den Prozessor veranlasst, das Verfahren nach einem der Ansprüche 1 bis 4 zu implementieren.

12. Computerprogrammprodukt, das ein Computerprogramm umfasst, wobei das Computerprogramm, wenn es von einem Prozessor ausgeführt wird, den Prozessor veranlasst, das Verfahren nach einem der Ansprüche 1 bis 4 zu implementieren.

## Revendications

1. Procédé de commande de réfrigération pour un système de refroidissement par liquide comprenant un dispositif de commande, un compresseur à fréquence fixe, un compresseur à fréquence variable et un serpentin de refroidissement d'huile, le compresseur à fréquence fixe et le compresseur à fréquence variable étant tous deux reliés au dispositif de commande et configurés pour comprimer un fluide frigorigène, le serpentin de refroidissement d'huile étant relié à un système de circulation de fluide de refroidissement du système de refroidissement par liquide et configuré pour refroidir naturellement un fluide de refroidissement, le procédé étant mis en œuvre par le dispositif de commande et comprenant :
acquérir une température d'environnement de fonctionnement du système de refroidissement par liquide (S202) ;
acquérir un changement de charge dans le système de refroidissement par liquide en réponse à la confirmation, sur la base de la température d'environnement de fonctionnement, qu'une condition de réfrigération par compression est actuellement satisfaite (S204) ; et
déterminer un mode de fonctionnement du compresseur adapté sur la base du changement de charge (S206), le mode de fonctionnement du compresseur étant utilisé pour ordonner au compresseur à fréquence fixe et au compresseur à fréquence variable de coopérer pour comprimer le fluide frigorigène jusqu'à ce que le fluide frigorigène comprimé pénètre dans un condenseur afin de compléter un cycle de réfrigération ;
dans lequel le procédé comprend de plus :
confirmer, si la température de l'environnement de fonctionnement est supérieure à un premier seuil de température, que la condition de réfrigération par compression est actuellement remplie, et fermer le serpentin de refroidissement d'huile, afin de déterminer le mode de fonctionnement du compresseur adapté sur la base du changement de charge (S302) ; et
confirmer, si la température de l'environnement de fonctionnement est inférieure ou égale à un second seuil de température inférieur au premier seuil de température, qu'une condition de refroidissement naturel est actuellement satisfaite, et ouvrir une vanne correspondante pour permettre au fluide de refroidissement d'entrer dans le serpentin de refroidissement d'huile (S304) ; et
dans lequel la détermination du mode de fonctionnement du compresseur adapté sur la base du changement de charge comprend :
établir, si le changement de charge est supérieur à une valeur de stabilité de charge, que le mode de fonctionnement du compresseur soit utilisé pour ordonner au compresseur à fréquence fixe d'avoir une charge de travail supérieure à celle du compresseur à fréquence variable ; et
établir, si le changement de charge est inférieur à la valeur de stabilité de charge, que le mode de fonctionnement du compresseur soit utilisé pour ordonner au compresseur à fréquence variable d'avoir une charge de travail supérieure à celle du compresseur à fréquence fixe.

2. Procédé selon la revendication 1, comprenant en outre :
déterminer, en réponse à l'acquisition d'une température de sortie du fluide de refroidissement, une fréquence de fonctionnement du compresseur à fréquence variable sur la base de la température de sortie du fluide de refroidissement.

3. Procédé selon la revendication 1 ou 2, dans lequel le système de refroidissement par liquide comprend en outre un ventilateur de refroidissement configuré pour refroidir le serpentin de refroidissement d'huile, et le procédé comprend en outre :
régler une vitesse de fonctionnement du ventilateur de refroidissement sur la base du changement de charge et de la température de l'environnement de fonctionnement.

4. Procédé selon l'une quelconque des revendications 1 à 3, dans lequel la détermination du mode de fonctionnement du compresseur adapté sur la base du changement de charge comprend :
établir, si une condition de charge actuelle est confirmée comme étant une condition de charge élevée sur la base du changement de charge, que le mode de fonctionnement du compresseur soit utilisé pour ordonner au compresseur à fréquence fixe d'effectuer la compression et au compresseur à fréquence variable d'arrêter la compression ; et
établir, si la condition de charge actuelle est confirmée comme étant une condition de charge faible sur la base du changement de charge, que le mode de fonctionnement du compresseur soit utilisé pour ordonner au compresseur à fréquence variable d'effectuer la compression et au compresseur à fréquence fixe d'arrêter la compression.

5. Dispositif de commande de réfrigération (500) pour un système de refroidissement par liquide comprenant un dispositif de commande, un compresseur à fréquence fixe, un compresseur à fréquence variable et un serpentin de refroidissement d'huile, le compresseur à fréquence fixe et le compresseur à fréquence variable étant tous deux reliés au dispositif de commande et configurés pour comprimer un fluide frigorigène, le serpentin de refroidissement d'huile étant relié à un système de circulation de fluide de refroidissement du système de refroidissement par liquide et configuré pour refroidir naturellement un fluide de refroidissement, le dispositif (500) étant appliqué au dispositif de commande et comprenant :
un module d'acquisition de température (502) configuré pour acquérir une température de l'environnement de fonctionnement du système de refroidissement par liquide ;
un module d'acquisition de changement de charge (504) configuré pour acquérir un changement de charge dans le système de refroidissement par liquide en réponse à la confirmation, sur la base de la température de l'environnement de fonctionnement, qu'une condition de réfrigération par compression est actuellement satisfaite ; et
un module de détermination du mode de fonctionnement (506) configuré pour déterminer un mode de fonctionnement du compresseur adapté sur la base du changement de charge, le mode de fonctionnement du compresseur étant utilisé pour ordonner au compresseur à fréquence fixe et au compresseur à fréquence variable de coopérer pour comprimer le fluide frigorigène jusqu'à ce que le fluide frigorigène comprimé pénètre dans un condenseur afin de compléter un cycle de réfrigération ;
dans lequel le module d'acquisition de changement de charge (504) est en outre configuré pour :
confirmer, si la température de l'environnement de fonctionnement est supérieure à un premier seuil de température, que la condition de réfrigération par compression est actuellement remplie, et fermer le serpentin de refroidissement d'huile, afin de déterminer le mode de fonctionnement du compresseur adapté sur la base du changement de charge ; et
confirmer, si la température de l'environnement de fonctionnement est inférieure ou égale à un second seuil de température inférieur au premier seuil de température, qu'une condition de refroidissement naturel est actuellement satisfaite, et ouvrir une vanne correspondante pour permettre au fluide de refroidissement d'entrer dans le serpentin de refroidissement d'huile ; et
dans lequel le module de détermination du mode de fonctionnement (506) est en outre configuré pour :
établir, si le changement de charge est supérieur à une valeur de stabilité de charge, que le mode de fonctionnement du compresseur soit utilisé pour ordonner au compresseur à fréquence fixe d'avoir une charge de travail supérieure à celle du compresseur à fréquence variable ; et
établir, si le changement de charge est inférieur à la valeur de stabilité de charge, que le mode de fonctionnement du compresseur soit utilisé pour ordonner au compresseur à fréquence variable d'avoir une charge de travail supérieure à celle du compresseur à fréquence fixe.

6. Dispositif (500) selon la revendication 5, dans lequel le module de détermination du mode de fonctionnement (506) est en outre configuré pour déterminer, en réponse à l'acquisition d'une température de sortie du fluide de refroidissement, une fréquence de fonctionnement du compresseur à fréquence variable sur la base de la température de sortie du fluide de refroidissement.

7. Dispositif (500) selon la revendication 5 ou 6, dans lequel le système de refroidissement par liquide comprend en outre un ventilateur de refroidissement configuré pour refroidir le serpentin de refroidissement d'huile, et le module de détermination du mode de fonctionnement (506) est en outre configuré pour régler une vitesse de fonctionnement du ventilateur de refroidissement sur la base du changement de charge et de la température de l'environnement de fonctionnement.

8. Dispositif (500) selon l'une quelconque des revendications 5 à 7, dans lequel le module de détermination du mode de fonctionnement (506) est en outre configuré pour :
établir, si une condition de charge actuelle est confirmée comme étant une condition de charge élevée sur la base du changement de charge, que le mode de fonctionnement du compresseur soit utilisé pour ordonner au compresseur à fréquence fixe d'effectuer la compression et au compresseur à fréquence variable d'arrêter la compression ; et
établir, si la condition de charge actuelle est confirmée comme étant une condition de charge faible sur la base du changement de charge, que le mode de fonctionnement du compresseur soit utilisé pour ordonner au compresseur à fréquence variable d'effectuer la compression et au compresseur à fréquence fixe d'arrêter la compression.

9. Système de refroidissement par liquide, comprenant un dispositif de commande, un compresseur à fréquence fixe, un compresseur à fréquence variable et un serpentin de refroidissement d'huile, le compresseur à fréquence fixe et le compresseur à fréquence variable étant tous deux configurés pour comprimer un fluide frigorigène et reliés au dispositif de commande, le serpentin de refroidissement d'huile étant relié à un système de circulation de fluide de refroidissement du système de refroidissement par liquide et configuré pour refroidir naturellement un fluide de refroidissement, dans lequel le dispositif de commande est configuré pour exécuter le procédé selon l'une quelconque des revendications 1 à 4.

10. Système de refroidissement par liquide selon la revendication 9, dans lequel le compresseur à fréquence fixe et le compresseur à fréquence variable comprennent chacun un compresseur à spirale.

11. Support de stockage lisible par ordinateur sur lequel est stocké un programme informatique, dans lequel le programme informatique, lorsqu'il est exécuté par un processeur, amène le processeur à mettre en œuvre le procédé selon l'une quelconque des revendications 1 à 4.

12. Produit de programme informatique, comprenant un programme informatique, dans lequel le programme informatique, lorsqu'il est exécuté par un processeur, amène le processeur à mettre en œuvre le procédé selon l'une quelconque des revendications 1 à 4.
